# EUROPÄISCHE PATENTSCHRIFT

(11) **EP 1 309 846 B1**
(45) Veröffentlichungstag und Bekanntmachung des Hinweises auf die Patenterteilung: **22.03.2006**
(21) Anmeldenummer: 01974196.6
(22) Anmeldetag: 16.08.2001
(51) Int. Cl.: G01N 1/28, G01N 1/04

(54) **TRÄGERVORRICHTUNG FÜR EIN PRÄPARAT ZUM SEPARIEREN EINZELNER OBJEKTE AUS DEM PRÄPARAT MITTELS LASERSTRAHLUNG**
SUPPORT DEVICE FOR A PREPARATION FOR THE SEPARATION OF INDIVIDUAL OBJECTS FROM THE PREPARATION BY MEANS OF LASER IRRADIATION
DISPOSITIF SUPPORT POUR UNE PREPARATION PERMETTANT LA SEPARATION PAR IRRADIATION LASER D'OBJETS INDIVIDUELS CONTENUS DANS LADITE PREPARATION

(30) Priorität: 16.08.2000 DE 10039979
(43) Veröffentlichungstag der Anmeldung: 14.05.2003
(73) Patentinhaber: P.A.L.M. Microlaser Technologies AG, 82347 Bernried (DE)
(72) Erfinder: SCHÜTZE, Karin, 82327 Tutzing (DE)
(74) Vertreter: Banzer, Hans-Jörg
(86) Internationale Anmeldenummer: PCT/EP2001/009468
(87) Internationale Veröffentlichungsnummer: WO 2002/014833

(56) Entgegenhaltungen:
- EP-A- 0 926 480
- EP-A- 0 993 964
- WO-A-97/29355
- US-A- 5 294 695
- EMMERT-BUCK M R ET AL: "LASER CAPTURE MICRODISSECTION" SCIENCE, AMERICAN ASSOCIATION FOR THE ADVANCEMENT OF SCIENCE,, US, Bd. 274, Nr. 5289, 8. November 1996 (1996-11-08), Seiten 998-1001, XP000644727 ISSN: 0036-8075
- SCHUETZE K ET AL: "CATCH AND MOVE - CUT OR FUSE" NATURE, MACMILLAN JOURNALS LTD. LONDON, GB, Bd. 368, 14. April 1994 (1994-04-14), Seiten 667-669, XP000647487 ISSN: 0028-0836

## Beschreibung

Die vorliegende Erfindung betrifft eine Trägervorrichtung für ein Präparat, insbesondere ein biologisches Präparat, welche dazu geeignet ist, einzelne in dem Präparat enthaltene Objekte, insbesondere biologische Objekte wie Zellen oder Chromosomen, aus dem Präparat mittels Laserstrahlung herauszulösen und somit von dem Präparat zu separieren.

Gattungsgemäße Trägervorrichtungen werden beispielsweise auf dem Gebiet der Mikrodissektion zum Sortieren und zur Gewinnung einzelner biologischer Zellen verwendet. Ein entsprechendes Verfahren ist beispielsweise in der WO 97/29355 A der Anmelderin beschrieben. In dieser Druckschrift wird vorgeschlagen, ein selektiertes biologisches Objekt von der auf einem planaren Träger befindlichen umgebenden biologischen Masse durch einen Laserstrahl abzutrennen, so dass das selektierte biologische Objekt von der umgebenden biologischen Masse frei präpariert ist. Zu diesem Zweck wird das selektierte biologische Objekt mittels Laserstrahlung aus der umgebenden biologischen Masse herausgeschnitten. Das somit frei präparierte biologische Objekt wird anschließend mit Hilfe eines Laserschusses von dem Träger zu einer Auffangvorrichtung katapultiert, wobei es sich bei der Auffangvorrichtung beispielsweise um ein Auffangsubstrat oder eine Auffangkappe ("Cap") handeln kann. In der Regel wird dieses Verfahren in Kombination mit einer entsprechenden Mikroskopanordnung angewendet, um den Schneide- und Katapultierprozess mikroskopunterstützt steuern zu können. Die Steuerung des Laserstrahls zum Herausschneiden und/oder Herauskatapultieren eines selektierten biologischen Objekts kann rechnergestützt erfolgen. Zur Gewinnung, d.h. Separierung, eines einzelnen biologischen Objekts ist nicht unbedingt erforderlich, dass zuerst ein Schneidevorgang und anschließend ein Katapultiervorgang mit Hilfe zwei separater Laserbestrahlungen durchgeführt wird, sondern Untersuchungen haben ergeben, dass in Abhängigkeit von der Laserenergie und dem Laserfokus sowie der Beschaffenheit des jeweils zu behandelnden biologischen Materials auch bereits ein einzelner Laserschuss ausreichen kann, um das gewünschte biologische Objekt direkt aus der umgebenden biologischen Masse herauszulösen und in die Auffangvorrichtung zu katapultieren.

Das mit der Laserstrahlung zu bearbeitende Präparat befindet sich in der Regel auf einem Glasobjektträger. Es kann sich jedoch auch auf einer das jeweilige Laserlicht absorbierenden Trägermembran, welche im Laufe des Schneidevorgangs zusammen mit dem Präparat geschnitten wird, befinden. In dem nachfolgenden Katapultiervorgang wird das frei präparierte biologische Objekt zusammen mit dem entsprechenden herausgeschnittenen Membranteil in die Auffangvorrichtung katapultiert. Die Verwendung einer derartigen Trägermembran ist vorteilhaft, da sich damit größere Objekte in ihrer Gesamtheit mit einzelnen Laserschüssen herauskatapultieren lassen, wobei die Trägermembran wie ein Tablett wirkt, mit dem auch größere Areale transportiert bzw. katapultiert werden können. Kleinere biologische Objekte, wie beispielsweise Filamente oder Chromosomen, lassen sich leichter frei präparieren, da sie an der Trägermembran haften bleiben und anschließend in dem Katapultiervorgang zusammen mit dem entsprechenden Membranteil morphologisch intakt in die Auffangvorrichtung katapultiert werden können.

Die Handhabbarkeit einer derartigen Trägermembran ist jedoch äußerst problematisch, da es sich bei dieser Membran um eine sehr dünne Membran mit einer Dicke im Mikrometerbereich handelt. Zusammen mit der Trägermembran, welche zur Aufnahme des zu bearbeitenden Präparats dient, muss daher ein laserlichtdurchlässiger Träger zum Tragen der Membran oder als Unterstützung der Membran verwendet werden. Dabei wird herkömmlicherweise ein Glas-Objektträger verwendet, wie er in bekannten Mikroskopen oder dergleichen verwendet wird. Das Aufbringen der Membran auf den Glas-Objektträger erfolgt dann in der Regel per Handarbeit, d.h. die Membran wird von dem jeweiligen Benutzer auf den Glas-Objektträger gelegt und gegebenenfalls durch Anbringen eines Spezialklebstoffes zwischen Membran und Glas-Objektträger an dem Glas-Objektträger befestigt.

Diese Vorgehensweise ist jedoch relativ aufwändig. Zudem kann nicht verhindert werden, dass aufgrund der "Welligkeit" der Membran einzelne Zwischenräume zwischen der Membran und dem Objektträger auftreten, die für die Laserbehandlung und die üblicherweise simultan erfolgende Mikroskopbetrachtung hinderlich sind. Derartige Zwischenräume treten auch beim Anbringen eines Klebemittels zum Kleben der Membran auf den Objektträger auf, da insbesondere im Bereich biologischer, chemischer oder medizinischer Analysen bzw. Experimente häufig mit wässrigen Lösungen oder wässrigen Präparaten (z.B. Alkohol) gearbeitet wird, so dass nicht ausgeschlossen werden kann, dass es zum Kontakt zwischen dem Klebemittel und Wasser kommt, was bei Verwendung eines wasserlöslichen Klebemittels die unerwünschte Folge hat, dass sich die Membran von dem Objektträger löst.

In Zusammenhang mit einer Einrichtung zur Handhabung von Proben für die membrangestützte Mikrodissektion wird in EP-A-0 926 480 vorgeschlagen, eine laserlichtabsorbierende Membran von einem Rahmen zu halten, so dass die Membran gespannt und somit leicht handhabbar ist. Zusätzlich zu dieser laserlichtabsorbierenden Membran wird zwar vorgeschlagen eine weitere Deckmembran zu verwenden. Diese übt aber keine Stütz- oder Tragfunktion auf die laserlichtabsorbierende Membran aus.

Der vorliegenden Erfindung liegt daher die Aufgabe zugrunde, eine Trägervorrichtung für ein Präparat, insbesondere ein biologisches Präparat, bereitzustellen, welche zum Separieren einzelner Objekte aus dem Präparat mittels Laserstrahlung geeignet ist und eine leichtere Handhabbarkeit der verwendeten Membran und damit eine leichtere Durchführung des Separationsprozesses ermöglicht.

Diese Aufgabe wird erfindungsgemäß durch eine Trägervorrichtung mit den Merkmalen des Anspruchs 1 gelöst. Die Unteransprüche definieren jeweils bevorzugte und vorteilhafte Ausführungsformen der vorliegenden Erfindung.

Erfindungsgemäß ist eine Haltevorrichtung oder ein Haltemittel vorgesehen, um die laserlichtabsorbierende Membran zu spannen und somit das zuvor beschriebene Problem der Welligkeit zu lösen.

Die Membran, welche zur Aufnahme des jeweils mittels Laserstrahlung zu bearbeitenden Präparats dient, kann auf einem Trägermittel aufliegen, wobei das Haltemittel ausgestaltet ist, um die Membran und das Trägermittel zusammenzuhalten. Auf diese Weise wird eine Einheit zwischen der Membran und dem Trägermittel geschaffen, d.h. die Membran und das Trägermittel werden in Form eines "Pakets" bereitgestellt, wodurch die Handhabbarkeit der gesamten Trägervorrichtung erleichtert wird.

Bei dem Trägermittel kann es sich beispielsweise um herkömmliche laserlichtdurchlässige Objektträger, insbesondere aus Glas, handeln, wobei die Haltemittel beispielsweise in Form eines insbesondere umlaufenden Rahmens ausgestaltet sind, so dass die Membran einerseits fest an dem Objektträger befestigt und andererseits gespannt ist, um Zwischenräume zwischen der Membran und dem Objektträger sowie eine "wellige" Oberfläche der Membran zu verhindern. Die Membran kann z.B. unter Anwendung von Wärme geglättet (z.B. mittels Vakuum) auf den Objektträger aufgebracht werden.

Ebenso kann es sich bei dem Trägermittel um eine gegenüber der laserlichtabsorbierenden Membran relativ dicke Membran handeln, beispielsweise aus Teflon mit einer Dicke von ca. 20 µm. Auch hier können die beiden Membrane durch in Form eines Rahmens ausgestaltete Haltemittel fest als eine Einheit zusammengehalten werden.

Besonders vorteilhaft ist es, die erfindungsgemäßen Haltemittel in Form einer Petrischale auszugestalten, wobei in der Petrischale die laserlichtabsorbierende Membran, welche zur Aufnahme des jeweils zu bearbeitenden Präparats dient, und eine zum Stützen bzw. Tragen dieser Membran vorgesehene weitere Membran unmittelbar aneinanderliegend gehalten werden. In der Petrischale können somit lebende Zellen oder Zellkulturen gezüchtet werden, welche anschließend von der laserlichtabsorbierenden Membran per Laserstrahlung herauskatapultiert werden, wobei das Herauskatapultieren direkt oder nach einem vorhergehenden Ausschneiden erfolgen kann.

Ein weiteres erfindungsgemäßes Ausführungsbeispiel sieht vor, die laserlichtabsorbierende Membran, welche durch die Laserstrahlung zusammen mit dem darauf befindlichen Präparat geschnitten bzw. wegkatapultiert wird, durch ein in Form einer Maske ausgebildetes Klebeband auf dem darunter befindlichen Trägermittel, beispielsweise in Form eines Glas-Objektträgers oder in Form einer dickeren laserlichtdurchlässigen Membran (z.B. aus Teflon), zu befestigen. Dabei wird das Klebeband derart angebracht, dass die laserlichtabsorbierende Membran direkt auf dem darunter befindlichen Trägermittel aufliegt und die Randbereiche dieser Membran mittels des Klebebands an dem darunter befindlichen Trägermittel befestigt werden, um die laserlichtabsorbierende Membran zu spannen.

Die erfindungsgemäße laserlichtabsorbierende Membran kann beispielsweise aus Polyester oder Polyethylen-Naphthalin bestehen. Die Polyethylen-Naphthalin-Membran besitzt den Vorteil, dass sie sich mittels Laserstrahlung, beispielsweise mittels UV-Lasterstrahlung, sehr gut schneiden lässt, so dass sich mit relativ geringer Schnittenergie eine sehr gute Schnittlinie ergibt. Der Einsatz der Polyethylen-Naphthalin-Membran ist insbesondere in Kombination mit Glas-Objektträgern sinnvoll und vorteilhaft. Zum Schneiden von Objekten, z.B. Chromosomen oder Filamenten, die in einem biologischen Material eng beieinander liegen, ist in einem gewissen Maße zunächst eine Ablation des biologischen Materials erforderlich, um eine reine Probenpräparation zu ermöglichen. Dabei erfolgt die Ablation mit einer geringeren Laserenergie. Bei der Ablation sollte die Membran, auf der sich das biologische Material befindet, nicht zerstört werden. Unter diesem Gesichtspunkt kann die Verwendung einer Polyester-Membran vorteilhaft sein, da diese Membran eine selektive Ablation des darauf befindlichen biologischen Materials ohne Zerstörung der Membran ermöglicht. Die Polyester-Membran kann daher immer dann zum Einsatz kommen, wenn sehr kleine biologische Objekte, wie beispielsweise Zellkompartimente, Chromosomen, Filamente oder Kernteile, aus dem umgebenden biologischen Material herausgeschnitten bzw. herauskatapultiert werden sollen.

Allgemein ist zu bemerken, dass die Kombination einer laserlichtabsorbierenden Membran mit einer darunter befindlichen Trägerfolie zum Stützen der erstgenannten Membran vorteilhaft ist, da bei einer Membran-Membran-Kombination mit einem Objektiv mit kurzem Arbeitsabstand, beispielsweise mit einem 100x-Objektiv, gearbeitet werden kann, was insbesondere für die Betrachtung von Filamenten oder Chromosomen von Vorteil ist. Bei Verwendung von normalen Glas-Objektträgern (Dicke 1 mm) können in der Regel nur mit einem Objektiv mit größerem Arbeitsabstand, beispielsweise mit einem 40x-Objektiv, zufriedenstellende Ergebnisse erzielt werden.

Da auf dem Gebiet chemischer, medizinischer oder biologischer Analysen bzw. Experimente häufig mit Zellflüssigkeiten etc. gearbeitet wird, sollte zumindest die laserlichtabsorbierende Membran, welche zur Aufnahme des jeweils zu bearbeitenden Präparats dient und zusammen mit dem Präparat geschnitten bzw. wegkatapultiert wird, hydrophilisiert sein, um ein "Abperlen" der auf dieser Membran befindlichen Flüssigkeit zu verhindern und eine gleichmäßige Verteilung der Flüssigkeit auf der Membran zu ermöglichen. Vorteilhafterweise sollte bei Verwendung einer Stütz- oder Trägerfolie auch diese zweite Membran hydrophilisiert sein. Die Hydrophilisierung der Membrane kann allgemein mit Hilfe herkömmlicher Prozesse bewerkstelligt werden, beispielsweise durch Plasmaprozesse, welche eine Ionisierung der Membranoberfläche zur Folge haben.

Die vorliegende Erfindung kann - wie zuvor beschrieben worden ist - vorzugsweise zur Bearbeitung biologischer Präparate und zum Separieren einzelner biologischer Objekte, wie beispielsweise lebender oder fixierter biologischer Zellen oder Zellbestandteile, Chromosomen oder Filamente etc., verwendet werden. Ebenso ist jedoch die vorliegende Erfindung auch zur Laserbehandlung von nicht biologischen Objekten bzw. unbelebter Materie geeignet, um z.B. mikroskopisch kleine Objekte aus Glas, Silica oder Kunststoffe aus einem entsprechenden umgebenden Material herauszulösen. Die vorliegende Erfindung wird jedoch nachfolgend zur Veranschaulichung anhand des Beispiels der Separation einzelner biologischer Objekte aus einer biologischen Masse bzw. einem biologischen Präparat beschrieben, wobei insbesondere bevorzugte Ausführungsbeispiele der vorliegenden Erfindung erläutert werden.
Figur 1 zeigt eine Darstellung einer Trägervorrichtung gemäß einem ersten Ausführungsbeispiel der vorliegenden Erfindung,
Figur 2 zeigt eine Darstellung einer Trägervorrichtung gemäß einem zweiten Ausführungsbeispiel der vorliegenden Erfindung,
Figur 3 zeigt eine Darstellung einer nicht-erfindungsgemäßen Trägervorrichtung,
Figur 4 zeigt eine Darstellung einer Trägervorrichtung gemäß einem weiteren Ausführungsbeispiel der vorliegenden Erfindung.

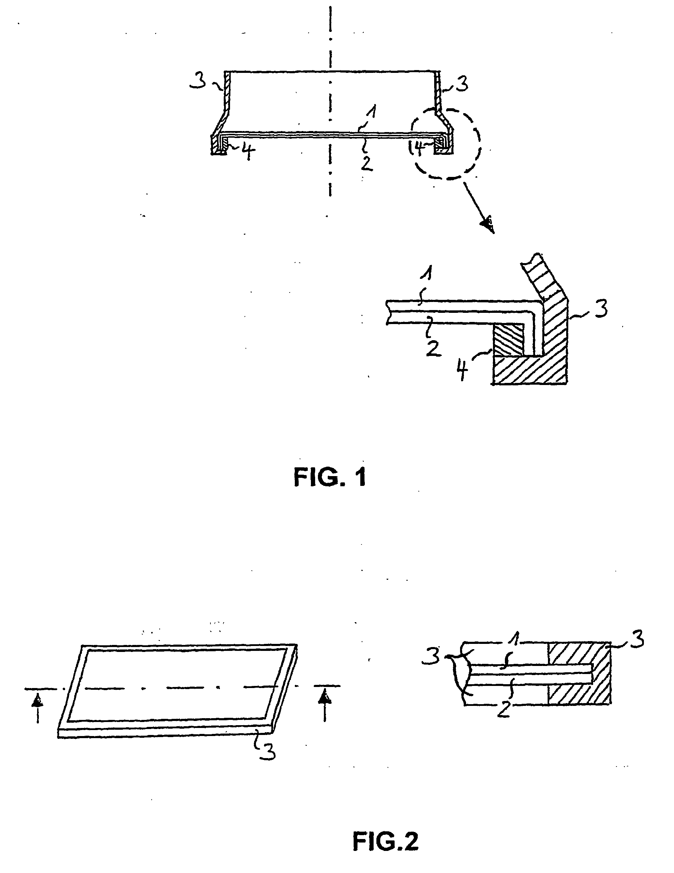

Die in Figur 1 im Querschnitt gezeigte Trägervorrichtung ist in Form einer sogenannten Petrischale ausgestaltet. Dabei handelt es sich um einen im vorliegenden Fall zylinderförmigen Grundkörper 3, dessen Oberseite offen ist, während die Unterseite von einer ersten Membran 2 abgedeckt ist. Diese Membran 2 kann beispielsweise aus Teflon bestehen und eine Dicke von ca. 20 µm aufweisen. Die Membran 2 ist an der Unterseite des Grundkörpers 3 mit Hilfe eines umlaufenden kreisförmigen Rings 4 zwischen dem Ring 4 und dem Grundkörper 3 eingespannt und planar. Derartige Petrischalen sind allgemein bekannt und handelsüblich. Der besondere Vorteil derartiger Petrischalen bzw. der darin verwendeten Membran 2 liegt darin, dass auf der Membran 2 lebende Zellkulturen gezüchtet werden können.

Erfindungsgemäß ist unmittelbar auf der Membran 2 eine weitere Membran 1 angeordnet, welche derart ausgestaltet ist, dass sie mittels Laserstrahlung geschnitten werden kann bzw. Objekte von ihr mit Hilfe des zuvor beschriebenen Laserkatapultiereffekts (auch direkt) wegkatapultiert werden können. Die Membran 1 muss demzufolge laserlichtabsorbierend ausgestaltet sein, während die Membran 2 bei Laserlichtbestrahlung nicht von dem Laserlicht beschädigt werden darf und daher laserlichtdurchlässig sein sollte. Die laserlichtabsorbierende Membran 1 wird wie die laserlichtdurchlässige Membran 2 zwischen dem Ring 4 und dem Grundkörper 3 der Petrischale derart eingespannt, dass sich eine planare Oberfläche ergibt. Die beiden Membrane 1 und 2 können gegebenenfalls aneinander geklebt sein oder aneinander haften.

Auf die laserlichtabsorbierende Membran 1 ist das zu bearbeitende biologische Material aufzutragen. Die Ausgestaltung der erfindungsgemäßen Trägervorrichtung in Form einer Petrischale ist insbesondere deshalb vorteilhaft, da in der Petrischale Zellkulturen gezüchtet werden können, welche anschließend unmittelbar einer Laserbehandlung zum Separieren einzelner biologischer Objekte aus dem jeweiligen biologischen Material unterzogen werden können, ohne die Zellkulturen aus der Petrischale entnehmen und auf einen herkömmlichen Objektträger aufbringen zu müssen.

Zur Laserbehandlung wird die in Figur 1 gezeigte Petrischale mit dem darin befindlichen Material beispielsweise derart oberhalb einer Laseranordnung positioniert, dass der von der Laseranordnung erzeugte Laserstrahl von unten auf die Petrischale trifft und die laserlichtdurchlässige Membran 2, welche als Boden bzw. Stütze für die wesentlich dünnere laserlichtabsorbierende Membran 1 dient, durchwandert. Da es sich bei der Membran 1 um eine laserlichtabsorbierende Membran handelt, kann nunmehr mit Hilfe des Laserstrahls durch eine entsprechende Relativbewegung zwischen der Petrischale und dem Laserstrahl die Membran 1 mit dem darauf befindlichen biologischen Material geschnitten werden, um einzelne zuvor selektierte biologische Objekte aus dem umgebenden biologischen Material herauszuschneiden. Wurden auf diese Weise die gewünschten biologischen Objekte separiert, kann mit Hilfe eines einzelnen Laserschusses oder einzelner Laserschüsse das jeweils gewünschte biologische Objekt mit dem entsprechenden herausgeschnittenen Membranteil der laserlichtabsorbierenden Membran 1 nach oben in eine geeignete Auffangvorrichtung, beispielsweise in ein Auffangsubstrat oder in eine Auffangkappe, katapultiert werden. Dies geschieht aufgrund eines laserinduzierten Katapultiervorgangs, der näher in der eingangs beschriebenen WO 97/29355 A, auf welche diesbezüglich verwiesen wird, erläutert ist. Die Laseranordnung kann beispielsweise in ein herkömmliches (aufrechtes oder inverses) Mikroskop integriert sein, um mit Hilfe der Mikroskopbetrachtung die gewünschten biologischen Objekte beispielsweise computerunterstützt selektieren und anschließend (ebenfalls computerunterstützt) per Laserbestrahlung separieren zu können. Untersuchungen haben ergeben, dass abhängig von der Beschaffenheit des zu bearbeitenden biologischen Materials bzw. der Laserart und der jeweils eingestellten Laserenergie sowie des Laserfokus auf den Schneidevorgang und einzelne biologische Objekte direkt aus dem biologischen Material mit Hilfe eines Laserschusses herauskatapultiert werden können.

Zur Laserbehandlung wird in der Regel ein gepulster Laser, welcher UV-Laserlicht emittiert, eingesetzt. Dabei kann es sich um einen N₂-Laser, einen Excimer-Laser, einen Nd:YAG-Laser oder einen Ar-Ionenlaser etc. handeln.

Wie bereits erwähnt worden ist, ist die laserlichtabsorbierende Membran 1, auf welcher das zu bearbeitende biologische Material befindlich ist, wesentlich dünner als die als Stütze dienende Membran 2. Als laserlichtabsorbierende Membran 1 kann beispielsweise eine Polyester-Membran mit einer Dicke von 0,9 µm - 1 µm oder eine Polyethylen-Naphthalin-Membran mit einer Dicke von ca. 1,35 µm verwendet werden. Die Polyethylen-Naphthalin-Membran ist beispielsweise zur Laserbehandlung von Zellgewebe vorteilhaft, da sie sich mit relativ geringer Laserenergie sehr gut schneiden lässt. Dagegen ist die Polyester-Membran von Vorteil, wenn eng beieinander liegende biologische Objekte, wie beispielsweise Chromosomen oder Filamente, aus dem umgebenden biologischen Material herauskatapultiert werden sollen, da hierfür für eine Probengewinnung häufig zunächst eine selektive Ablation des umliegenden biologischen Materials erforderlich ist, was bei Anwendung einer Polyester-Membran ohne Zerstörung der Membran möglich ist.

Insgesamt wird - wie aus Figur 1 ersichtlich ist - eine sehr kompakte Trägervorrichtung für ein mittels Laserstrahlung zu behandelndes biologisches Material bereitgestellt, wobei sich diese Trägervorrichtung insbesondere als Einwegartikel herstellen lässt. Ein manuelles Aufbringen der laserlichtabsorbierenden Membran 1 auf das darunter befindliche Trägermaterial 2, welches im vorliegenden Fall ebenfalls in Form einer Membran ausgestaltet ist, entfällt. Da beide Membrane 1 und 2 zwischen dem Grundkörper 3 und dem Ring 4 eingespannt sind, ist eine planare Oberfläche insbesondere der Membran 1 sowie ein enges Aneinander-Liegen der Membrane 1 und 2 gewährleistet. Eine "wellige" Oberfläche beider Membrane wird auf diese Weise verhindert.

In Figur 2 ist ein zweites Ausführungsbeispiel einer erfindungsgemäßen Trägervorrichtung dargestellt.

Auch in Figur 2 ist die laserlichtabsorbierende Membran mit dem Bezugszeichen 1 und die darunter befindliche und als Stütze bzw. Auflage für die laserlichtabsorbierende Membran dienende laserlichtdurchlässige Membran mit dem Bezugszeichen 2 versehen. Hinsichtlich der Beschaffenheit beider Membrane wird auf die obigen Ausführungen zu dem in Figur 1 gezeigten Ausführungsbeispiel verwiesen. Wie insbesondere aus der in Figur 2 gezeigten vergrößerten Querschnittsansicht eines Randbereichs der dargestellten Trägervorrichtung ersichtlich ist, werden die beiden Membrane 1 und 2 durch einen Rahmen 3, welcher beispielsweise aus Kunststoff gefertigt ist, derart zusammengehalten, dass die beiden Membrane 1 und 2 eng aneinander bzw. unmittelbar aufeinander liegen und insgesamt eine kompakte Einheit bereitgestellt wird, welche entsprechend leicht zu handhaben ist. Bei dem in Figur 2 gezeigten Ausführungsbeispiel sind die beiden Membrane 1 und 2 in den vollständig umlaufenden Rahmen 3 eingespannt. Der Rahmen 3 erfüllt analog zu dem in Figur 1 gezeigten Ausführungsbeispiel somit im Prinzip zwei Funktionen, nämlich einerseits die planare Oberfläche der beiden Membrane 1 und 2 herbeizuführen und andererseits die beiden Membrane 1 und 2 fest zusammenzuhalten. Bei dem Rahmen 3 kann es sich beispielsweise ebenso um einen flachen Metallrahmen, vorzugsweise aus Edelstahl, handeln.

Wie aus Figur 2 ersichtlich ist, ist die dargestellte Trägervorrichtung in Form eines herkömmlichen Objektträgers ausgestaltet, wie er insbesondere in handelsüblichen Mikroskopen zu verwenden ist. Zur Laserbearbeitung des auf der laserlichtabsorbierenden Membran 1 befindlichen biologischen Materials kann die dargestellte Trägervorrichtung wie bezüglich des in Figur 1 dargestellten Ausführungsbeispiels erläutert oberhalb (bzw. bei Verwendung eines aufrechten Mikroskops unterhalb) einer Laseranordnung positioniert und beispielsweise mit UV-Laserlicht bestrahlt werden, um einzelne biologische Objekte aus dem umgebenden biologischen Material herauszulösen und in eine Auffangvorrichtung zu katapultieren.

Grundsätzlich kann anstelle einer laserlichtdurchlässigen Membran auch ein fester laserlichtdurchlässiger Körper verwendet werden, welcher als Träger bzw. als Stütze für die darauf befindliche laserlichtabsorbierende Membran 1 dient. Dabei kann es sich insbesondere um einen herkömmlichen Glas-Objektträger handeln, welcher handelsüblich beispielsweise eine Dicke von ca. 1 mm oder ca. 0,17 mm aufweist. Mit Hilfe des Rahmens 3 wird dann die laserlichtabsorbierende Membran, welche durch das entsprechende Laserlicht geschnitten und zusammen mit den darauf befindlichen biologischen Objekten mit Hilfe eines Laserschusses herauskatapultiert wird, sowie der Glas-Objektträger 2 fest zusammengehalten. Die Verwendung eines Glas-Objektträgers ist zwar grundsätzlich zur Laserbearbeitung von Zellgewebe geeignet, dünne Glas-Objektträger (Dicke 0,17 mm) brechen jedoch sehr leicht und normale Glas-Objektträger (Dicke 1 mm) sind nur für Objektive mit relativ großem Arbeitsabstand geeignet. Bei Verwendung einer Membran-Membran-Kombination können hingegen auch Objektive mit geringem Arbeitsabstand, z.B. 100x-Objektive, eingesetzt werden.

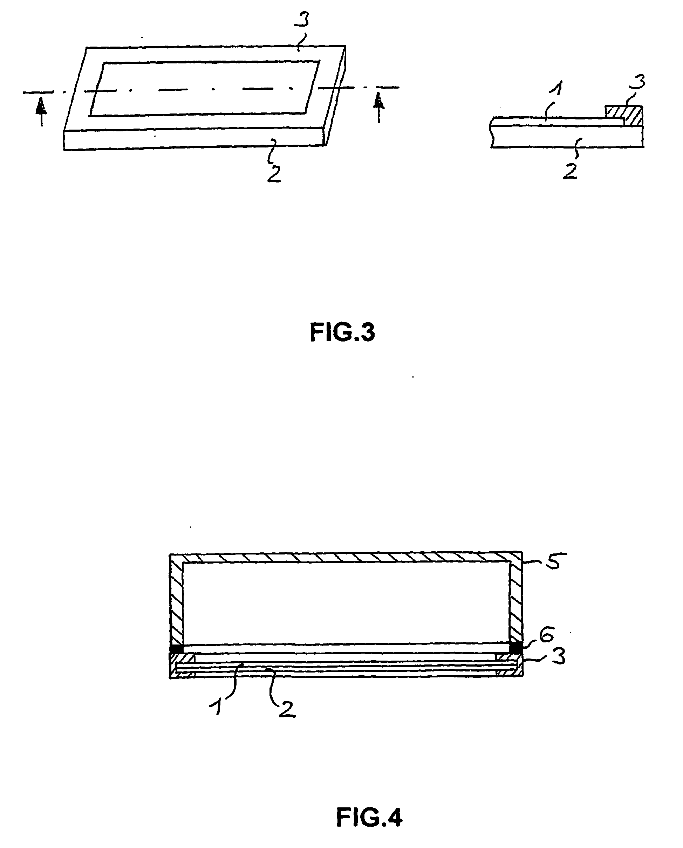

In Figur 3 ist ein weiteres Beispiel (kein Gegenstand der Erfindung) dargestellt, wobei wiederum einerseits eine perspektivische Ansicht und andererseits eine vergrößerte Querschnittsansicht eines Randbereichs dieses Ausführungsbeispiels dargestellt ist.

Bei dem in Figur 3 gezeigten Beispiel wird als Trägermaterial ein herkömmlicher Glas-Objektträger 2 verwendet, auf dem eine laserlichtabsorbierende Membran aufliegt. Die laserlichtabsorbierende Membran 1 wird auf dem Glas-Objektträger 2 mit Hilfe eines insbesondere umlaufenden Klebemittels bzw. Klebebands 3 gehalten, welches die Form einer dem Glas-Objektträger entsprechenden Maske besitzt, d.h. das Klebeband 3 ist in Form eines rechteckförmigen Rands ausgebildet, wobei der innere Randbereich auf der seitlichen Oberfläche der Membran 1 aufliegt, während der äußere Randbereich des Klebebands 3 auf der äußeren Oberfläche des Glas-Objektträgers aufliegt, so dass die laserlichtabsorbierende Membran und der Glas-Objektträger 2 fest zusammengehalten werden und wiederum eine äußerst kompakte Einheit, welche entsprechend einfach zu handhaben ist, bereitgestellt wird.

Anstelle des Glas-Objektträgers kann analog zu den in Figur 1 und Figur 2 gezeigten Ausführungsbeispielen selbstverständlich auch eine Stützfolie verwendet werden. Hinsichtlich der Beschaffenheit der laserlichtabsorbierenden Membran 1 sowie des Objektträgers 2 bzw. der entsprechenden Trägerfolie sei wiederum auf die zuvor beschriebenen Ausführungsbeispiele verwiesen.

In Figur 4 ist ein weiteres Ausführungsbeispiel einer erfindungsgemäßen Trägervorrichtung dargestellt.

Dabei ist in Figur 4 die Trägervorrichtung grundsätzlich ähnlich zu der in Figur 2 dargestellten Trägervorrichtung aufgebaut und in Form einer Querschnittsansicht dargestellt. Die Trägervorrichtung umfasst somit einen Rahmen 3, der die laserlichtabsorbierende Membran 1 und die darunter befindliche und als Stütze bzw. Auflage für die laserlichtabsorbierende Membran dienende laserlichtdurchlässige Membran 2 zusammenhält und spannt. Der Rahmen 3 ist möglichst dünn ausgestaltet, um ein näheres Anfahren des Objektivs des jeweils verwendeten Mikroskops an das auf der laserlichtabsorbierenden Membran 1 befindliche Präparat zu ermöglichen. Darüber hinaus kann mit einem möglichst flachen Rahmen 3 auch der zum Auffangen von herauskatapultierten biologischen Objekten verwendete Auffangbehälter näher an die Trägervorrichtung heranbewegt werden, so dass die biologischen Objekte mit einer geringeren Streuung herauskatapultiert werden können.

Als Ergänzung zu dem in Figur 2 dargestellten Ausführungsbeispiel ist gemäß Figur 4 auf den Rahmen 3 ein quaderförmiger Behälter 5 mit einem (nicht gezeigten) Einfüllanschluss für lebende (flüssige) Zellkulturen aufgesetzt und beispielsweise mit Hilfe eines Silikonklebstoffes 6 an dem Rahmen 3 angeklebt. Das Innere des Behälters 5 ist somit luftdicht abgedichtet, so dass die in dem Behälter 5 und auf der laserlichtabsorbierenden Membran 1 befindlichen Zellkulturen in einem Brutschrank auf der Trägervorrichtung wachsen können.

Zur Verwendung der in Figur 4 dargestellten Trägervorrichtung in einem Laser-Mikrodissektionssystem der zuvor beschriebenen Art kann der Behälter 5 durch Ausüben einer entsprechenden Zugkraft von dem Rahmen 3 abgerissen werden, so dass die danach verbleibende Trägervorrichtung analog zu der in Figur 2 gezeigten Trägervorrichtung verwendet werden kann. Die durch den Silikonklebstoff 6 bewerkstelligte Befestigung des Behälters 5 an dem Rahmen 3 ist somit lösbar.

Selbstverständlich kann der Behälter auch auf andere Art und Weise lösbar an der Trägervorrichtung bzw. vorzugsweise an dem Rahmen 3 der Trägervorrichtung befestigt werden, beispielsweise durch eine Vakuumbefestigung. Darüber hinaus muss der Behälter 5 nicht unbedingt wie bei dem in Figur 4 gezeigten Ausführungsbeispiel einen auf den Umfang des umlaufenden Rahmens 3 abgestimmten Umfang aufweisen. Die Höhe des Behälters 5 kann beispielsweise in der Größenordnung von 1 cm liegen.

Bei den zuvor erläuterten und in Figur 1, 2 und 4 gezeigten Ausführungsbeispielen wurde jeweils ein Trägermittel 2 als Stütze für die laserlichtabsorbierende Membran 1 verwendet. Die Verwendung einer laserlichtabsorbierenden Membran (vgl. die in Figur 1, Figur 2 und Figur 4 dargestellten Ausführungsbeispiele) als Trägermittel 2 ist gegenüber der Verwendung eines Glas-Objektträgers (vgl. das in Figur 3 dargestellte Beispiel) insbesondere bei stark vergrößernden Mikroskopen vorteilhaft, da eine Stützmembran bessere optische Eigenschaften aufweist und somit die Mikroskopierfähigkeit verbessert.

Die vorliegende Erfindung ist jedoch nicht auf die Verwendung eines Trägermittels der zuvor beschriebenen Art beschränkt, sondern es kann auch vollständig auf ein Trägermittel 2 verzichtet werden, wobei dann lediglich die laserlichtabsorbierende Membran wie zuvor beschrieben gehalten und gespannt wird, um eine ausreichend große Straffheit der laserlichtabsorbierenden Membran 1 zu erzielen. Eine derartige Anordnung ist insbesondere dann ausreichend, wenn trockene Präparate verwendet werden. Dabei kann die laserlichtabsorbierende Membran 1 beispielsweise auf den Rahmen 3 aufgeklebt sein, was insbesondere dann genügt, wenn das auf die laserlichtabsorbierende Membran 1 aufgebrachte Präparat anschließend keinen weiteren chemischen Prozeduren unterzogen wird. Die in den Figuren 1-4 dargestellte Art der Halterung der laserlichtabsorbierenden Membran 1 in dem Rahmen 3 ohne Verwendung eines Klebstoffes ist hingegen aufgrund der verbesserten Chemikalienresistenz vorteilhaft, wenn das auf die laserlichtabsorbierende Membran 1 aufgebrachte Präparat chemischen Prozeduren unterzogen werden soll.

Bei Verwendung von flüssigen Präparaten, wie beispielsweise lebenden Zellen, ist die Verwendung eines Trägermittels 2 der zuvor beschriebenen Art, insbesondere einer Stützmembran, vorteilhaft, da ansonsten bei Verwendung lediglich der laserlichtabsorbierenden Membran 1 als Träger für das darauf befindliche biologische Material beim Ausschneiden und Katapultieren einzelner biologischer Objekte Flüssigkeit durch die dann entstehenden Löcher in der Membran 1 fließen würde.

## Patentansprüche

1. Trägervorrichtung für ein Präparat, insbesondere für ein biologisches Präparat, zum Separieren einzelner Objekte aus dem Präparat mittels Laserstrahlung,
mit einer laserlichtabsorbierenden Membran (1) zur Aufnahme des Präparats,
mit einem zum Tragen der laserlichtabsorbierenden Membran (1) vorgesehenen Trägermittel (2), und
mit Haltemitteln (3, 4), welche derart ausgestaltet sind, dass sie die laserlichtabsorbierende Membran (1) und das Trägermittel (2) zusammenhalten und die laserlichtabsorbierende Membran (1) spannen,
**dadurch gekennzeichnet,**
**dass** das Trägermittel (2) eine weitere Membran ist, auf welcher unmittelbar die laserlichtabsorbierende Membran (1) angeordnet ist.

2. Trägervorrichtung nach Anspruch 1,
**dadurch gekennzeichnet,**
**dass** die laserlichtabsorbierende Membran (1) eine Polyethylen-Naphthalin-Membran ist.

3. Trägervorrichtung nach Anspruch 2,
**dadurch gekennzeichnet,**
**dass** die Polyethylen-Naphthalin-Membran eine Dicke von ca. 1,35 *µ*m besitzt.

4. Trägervorrichtung nach Anspruch 1,
**dadurch gekennzeichnet,**
**dass** die laserlichtabsorbierende Membran (1) eine Polyester-Membran ist.

5. Trägervorrichtung nach Anspruch 4,
**dadurch gekennzeichnet,**
**dass** die Polyester-Membran eine Dicke von 0,9 *µ*m - 1 *µ*m besitzt.

6. Trägervorrichtung nach einem der vorhergehenden Ansprüche,
**dadurch gekennzeichnet,**
**dass** die weitere Membran (2) aus Teflon gefertigt ist.

7. Trägervorrichtung nach einem der vorhergehenden Ansprüche,
**dadurch gekennzeichnet,**
**dass** die weitere Membran (2) eine Dicke von ca. 20 *µ*m besitzt.

8. Trägervorrichtung nach einem der vorhergehenden Ansprüche,
**dadurch gekennzeichnet,**
**dass** die weitere Membran (2) laserlichtdurchlässig ist.

9. Trägervorrichtung nach einem der vorhergehenden Ansprüche,
**dadurch gekennzeichnet,**
**dass** die laserlichtabsorbierende Membran (1) hydrophilisiert ist.

10. Trägervorrichtung nach einem der vorhergehenden Ansprüche,
**dadurch gekennzeichnet,**
**dass** die Haltemittel (3, 4) umlaufend um die laserlichtabsorbierende Membran (1) und die weitere Membran (2) ausgestaltet sind.

11. Trägervorrichtung nach einem der vorhergehenden Ansprüche,
**dadurch gekennzeichnet,**
**dass** die Haltemittel (3, 4) in Form eines Rahmens, welcher die laserlichtabsorbierende Membran (1) und die weitere Membran (2) spannt, ausgestaltet sind.

12. Trägervorrichtung nach Anspruch 11,
**dadurch gekennzeichnet,**
**dass** die laserlichtabsorbierende Membran (1) an dem Rahmen befestigt ist.

13. Trägervorrichtung nach Anspruch 12,
**dadurch gekennzeichnet,**
**dass** die laserlichtabsorbierende Membran (1) an dem Rahmen angeklebt ist.

14. Trägervorrichtung nach einem der vorhergehenden Ansprüche,
**dadurch gekennzeichnet,**
**dass** die Haltemittel (3, 4) Bestandteil einer Petrischale sind.

15. Trägervorrichtung nach Anspruch 14,
**dadurch gekennzeichnet,**
**dass** die laserlichtabsorbierende Membran (1) und die weitere Membran (2) am Boden der Petrischale durch die Haltemittel (3, 4) gehalten sind.

16. Trägervorrichtung nach einem der Ansprüche 1-9,
**dadurch gekennzeichnet,**
**dass** die Haltemittel (3) in Form eines Klebebands ausgestaltet sind, wobei die klebende Oberfläche des Klebebands (3) einerseits auf der Randoberfläche der laserlichtabsorbierenden Membran (1) und andererseits auf der weiteren Membran (2) aufliegt.

17. Trägervorrichtung nach einem der vorhergehenden Ansprüche,
**dadurch gekennzeichnet,**
**dass** ein Behälter (5) zum Aufnehmen des Präparats vorgesehen und mit Hilfe von Befestigungsmitteln (6) an der Trägervorrichtung lösbar befestigt ist.

18. Trägervorrichtung nach Anspruch 17,
**dadurch gekennzeichnet,**
**dass** die Befestigungsmittel (6) derart ausgestaltet sind, dass durch sie eine lösbare Klebeverbindung zwischen dem Behälter (5) und der Trägervorrichtung gegeben ist.

19. Trägervorrichtung nach Anspruch 17 oder 18,
**dadurch gekennzeichnet,**
**dass** die Befestigungsmittel (6) derart ausgestaltet sind, dass die durch sie erzielte Befestigung des Behälters (5) an der Trägervorrichtung durch Ausüben einer an dem Behälter (5) oder der Trägervorrichtung angreifenden Kraft lösbar ist.

20. Trägervorrichtung nach einem der Ansprüche 17-19,
**dadurch gekennzeichnet,**
**dass** der Behälter (5) mit Hilfe der Befestigungsmittel (6) an den Haltemitteln (3, 4) der Trägervorrichtung befestigt ist.

21. Trägervorrichtung nach einem der Ansprüche 17-20,
**dadurch gekennzeichnet,**
**dass** der Behälter (5) derart ausgestaltet ist, dass bei Verwendung von lebenden Zellkulturen als das Präparat diese auf der Trägervorrichtung innerhalb des Behälters (5) wachsen können.

## Claims

1. A support device for a preparation, in particular a biological preparation, for separating individual objects from the preparation by means of laser irradiation, comprising
a laser light absorbent membrane (1) for receiving the preparation,
a carrier means (2) provided to carry the laser light absorbent membrane (1), and
retaining means (3, 4) which are so configured that they hold together the laser light absorbent membrane (1) and the carrier means (2) and tension the laser light absorbent membrane (1),
**characterised in that**
the carrier means (2) is a further membrane on which the laser light absorbent membrane (1) is directly arranged.

2. A support device according to Claim 1, **characterised in that** the laser light absorbent membrane (1) is a polyethylene-naphthalene membrane.

3. A support device according to Claim 2, **characterised in that** the polyethylene-naphthalene membrane has a thickness of approx. 1.35 µm.

4. A support device according to Claim 1, **characterised in that** the laser light absorbent membrane (1) is a polyester membrane.

5. A support device according to Claim 4, **characterised in that** the polyester membrane has a thickness of 0.9 µm - 1 µm.

6. A support device according one of the preceding claims, **characterised in that** the further membrane (2) is made of Teflon.

7. A support device according to one of the preceding claims, **characterised in that** the further membrane (2) has a thickness of approx. 20 µm.

8. A support device according to one of the preceding claims, **characterised in that** the further membrane (2) is laser light transparent.

9. A support device according to one of the preceding claims, **characterised in that** the laser light absorbent membrane (1) is hydrophilised.

10. A support device according to one of the preceding claims, **characterised in that** the retaining means (3, 4) are formed around the entire periphery of the laser light absorbent membrane (1) and of the further membrane (2).

11. A support device according to one of the preceding claims, **characterised in that** the retaining means (3,4) take the form of a frame which tensions the laser light absorbent membrane (1) and the further membrane (2).

12. A support device according to Claim 11, **characterised in that** the laser light absorbent membrane (1) is fixed to the frame.

13. A support device according to Claim 12, **characterised in that** the laser light absorbent membrane (1) is bonded to the frame.

14. A support device according to one of the preceding claims, **characterised in that** the retaining means (3, 4) are components of a Petri cup.

15. A support device according to Claim 14, **characterised in that** the laser light absorbent membrane (1) and the further membrane (2) are retained on the base of the Petri cup by the retaining means (3, 4).

16. A support device according to one of claims 1-9, **characterised in that** the retaining means (3) take the form of an adhesive tape, the adhesive surface of the adhesive tape (3) being in contact, firstly, with the edge surface of the laser light absorbent membrane (1) and, secondly, with the further membrane (2).

17. A support device according to one of the preceding claims, **characterised in that** a receptacle (5) is provided to receive the preparation and is fixed releasably to the support device by means of fixing means (6).

18. A support device according to Claim 17, **characterised in that** the fixing means (6) are so configured as to provide a releasable adhesive connection between the receptacle (5) and the support device.

19. A support device according to Claim 17 or 18, **characterised in that** the fixing means (6) are so configured that the fixing of the receptacle (5) to the support device obtained by means of said fixing means (6) is releasable by exerting a force acting on the receptacle (5) or on the support device.

20. A support device according to one of claims 17-19, **characterised in that** the receptacle (5) is fixed to the retaining means (3, 4) of the support device by the fixing means (6).

21. A support device according to one of claims 17-20, **characterised in that** the receptacle (5) is so configured that when live cell cultures are used as the preparation said cell cultures can grow inside the receptacle (5) on the support device.

## Revendications

1. Dispositif support pour une préparation, en particulier pour une préparation biologique, permettant la séparation par rayon laser d'objets individuels contenus dans la préparation, comprenant une membrane absorbant la lumière laser (1) destinée à recevoir la préparation, un moyen de support (2) prévu pour porter la membrane absorbant la lumière laser (1) et des moyens de maintien (3, 4) qui sont réalisés de telle manière qu'ils maintiennent ensemble la membrane absorbant la lumière laser (1) et le moyen de support (2) et tendent la membrane absorbant la lumière laser (1), **caractérisé en ce que** le moyen de support (2) est une autre membrane sur laquelle la membrane absorbant la lumière laser (1) est disposée directement.

2. Dispositif support selon la revendication 1, **caractérisé en ce que** la membrane absorbant la lumière laser (1) est une membrane en polyéthylène naphtalène.

3. Dispositif support selon la revendication 2, **caractérisé en ce que** la membrane en polyéthylène naphtalène possède une épaisseur d'environ 1,35 µm.

4. Dispositif support selon la revendication 1, **caractérisé en ce que** la membrane absorbant la lumière laser (1) est une membrane en polyester.

5. Dispositif support selon la revendication 4, **caractérisé en ce que** la membrane en polyester possède une épaisseur de 0,9 µm à 1 µm.

6. Dispositif support selon l'une quelconque des revendications précédentes, **caractérisé en ce que** l'autre membrane (2) est réalisée en téflon.

7. Dispositif support selon l'une quelconque des revendications précédentes, **caractérisé en ce que** l'autre membrane (2) possède une épaisseur d'environ 20 µm.

8. Dispositif support selon l'une quelconque des revendications précédentes, **caractérisé en ce que** l'autre membrane (2) est transparente à la lumière laser.

9. Dispositif support selon l'une quelconque des revendications précédentes, **caractérisé en ce que** la membrane absorbant la lumière laser (1) est hydrophilisée.

10. Dispositif support selon l'une quelconque des revendications précédentes, **caractérisé en ce que** les moyens de maintien (3, 4) sont réalisés de telle manière qu'ils entourent la membrane absorbant la lumière laser (1) et l'autre membrane (2).

11. Dispositif support selon l'une quelconque des revendications précédentes, **caractérisé en ce que** les moyens de maintien (3, 4) sont réalisés sous la forme d'un cadre qui tend la membrane absorbant la lumière laser (1) et l'autre membrane (2).

12. Dispositif support selon la revendication 11, **caractérisé en ce que** la membrane absorbant la lumière laser (1) est fixée sur le cadre.

13. Dispositif support selon la revendication 12, **caractérisé en ce que** la membrane absorbant la lumière laser (1) est collée sur le cadre.

14. Dispositif support selon l'une quelconque des revendications précédentes, **caractérisé en ce que** les moyens de maintien (3, 4) font partie intégrante d'une boîte de Pétri.

15. Dispositif support selon la revendication 14, **caractérisé en ce que** la membrane absorbant la lumière laser (1) et l'autre membrane (2) sont maintenues au fond de la boîte de Pétri par les moyens de maintien (3, 4).

16. Dispositif support selon l'une des revendications 1 à 9, **caractérisé en ce que** les moyens de fixation (3) sont réalisés sous la forme d'un ruban adhésif, la surface adhésive du ruban adhésif (3) reposant sur la surface de bordure de la membrane absorbant la lumière laser (1), d'une part, et sur l'autre membrane (2), d'autre part.

17. Dispositif support selon l'une quelconque des revendications précédentes, **caractérisé en ce qu'**il est prévu un récipient (5) qui est destiné à recevoir la préparation et est fixé de manière séparable sur le dispositif support à l'aide de moyens de fixation (6).

18. Dispositif support selon la revendication 17, **caractérisé en ce que** les moyens de fixation (6) sont réalisés de telle manière que, par eux, il existe un assemblage adhésif séparable entre le récipient (5) et le dispositif support.

19. Dispositif support selon la revendication 17 ou 18, **caractérisé en ce que** les moyens de fixation (6) sont réalisés de telle manière que la fixation obtenue par eux du récipient (5) sur le dispositif support est séparable en exerçant une force appliquée sur le récipient (5) ou le dispositif support.

20. Dispositif support selon l'une des revendications 17 à 19, **caractérisé en ce que** le récipient (5) est fixé à l'aide des moyens de fixation (6) sur les moyens de maintien (3, 4) du dispositif support.

21. Dispositif support selon l'une des revendications 17 à 20, **caractérisé en ce que** le récipient (5) est réalisé de telle manière que, dans le cas de l'utilisation de cultures de cellules vivantes comme préparation, celles-ci peuvent se développer sur le dispositif support à l'intérieur du récipient (5).
